Europäisches Patentamt

European Patent Office

Office européen des brevets

(11) Publication number: **0 223 057 B1**

# EUROPEAN PATENT SPECIFICATION

(45) Date of publication of patent specification: **07.10.92**   (51) Int. Cl.⁵: **G11B 7/00**, G11B 7/125

(21) Application number: **86114144.8**

(22) Date of filing: **13.10.86**

(54) **An optical recording method and an apparatus using the method.**

(30) Priority: **16.10.85 JP 228775/85**

(43) Date of publication of application:
**27.05.87 Bulletin 87/22**

(45) Publication of the grant of the patent:
**07.10.92 Bulletin 92/41**

(84) Designated Contracting States:
**NL**

(56) References cited:
**EP-A- 0 106 673**
**US-A- 4 383 261**
**US-A- 4 530 080**

(73) Proprietor: **HITACHI, LTD.**
**6, Kanda Surugadai 4-chome**
**Chiyoda-ku, Tokyo 100(JP)**

(72) Inventor: **Tsuboi, Nobuyoshi**
**2081, Ishigamitojuku Tokaimura**
**Naka-gun Ibaraki-ken(JP)**
Inventor: **Watanabe, Atsumi**
**14-4, Kujicho-7-chome**
**Hitachi-shi(JP)**
Inventor: **Sato, Yoshio**
**3-15, Hanayamacho-1-chome**
**Hitachi-shi(JP)**
Inventor: **Shimada, Satoshi**
**7-12, Kanesawacho-5-chome**
**Hitachi-shi(JP)**
Inventor: **Sasaki, Hiroshi**
**23-2, Higashionumacho-2-chome**
**Hitachi-shi(JP)**

(74) Representative: **Patentanwälte Beetz sen. -**
**Beetz jun. Timpe - Siegfried - Schmitt-**
**Fumian**
**Steinsdorfstrasse 10**
**W-8000 München 22(DE)**

## Description

The present invention relates to a heat mode method and apparatus for optical recording in which a signal is recorded according to the fact that when a light spot is irradiated onto a location of the optical recording medium, an optical characteristic of the medium is changed because the temperature at this location is increased.

JP-A-59-68844 describes an apparatus in which a laser beam having a very small diameter of about 1 $\mu$m is irradiated, for example, onto a rotating optical recording disk coated with a photosensitive recording material so as to record signals at a high density and to reproduce the recorded signals. This system has the advantages that, due to the high recording density, the memory cost per bit can be lowered, that a high-speed access is possible, and that the optical head and the optical recording disk are not brought into contact with each other during the recording and play-back operations, and hence the reliability of the optical recording disk and the optical recording apparatus can be improved.

As recording media applicable to the optical recording, there have been proposed, for example, a medium having a thin recording film which is evaporated by the thermal energy of the laser light to form small holes in the thin film, and a medium having a thin recording film the optical density of which is changed by the thermal energy of the laser light.

In addition, for the recording thin film the optical density of which is changed, it has been reported that the optical density can be reversibly changed by use of an amorphous thin film. The fact that the optical density can be reversibly changed means that a signal can be recorded, reproduced, and erased; however, a recording thin film made of an amorphous material is substantially unstable, because the crystallization of the amorphous material proceeds also at room temperature, and hence such a thin film is not suitable for storing recorded data for a long period of time. Moreover, Te, Se, and Sn are used to increase the recording sensitivity; however, these materials have a harmful influence on the human body, and when the thin film is manufactured or when a disposal of the waste of such materials is conducted, there is the possibility that a problem of contamination may arise. In addition, the high recording sensitivity means that the thin film is susceptible to influences of temperature, light, and the like, which leads to the problem of retention for keeping the recorded data.

As an optical recording medium, an alloy has been developed in which a phase change is effected between two different crystal states, and the information recording and erasure can be achieved by utilizing the difference of the optical reflection factor between these crystal states. This alloy is described in JP-A-60-186825 and JP-A-61-9542.

EP-A-106 673 discloses a method and an apparatus for recording, reproducing and erasing information signals, wherein two laser beams of different wavelengths and controllable intensities are closely irradiated onto the same guide track on an optical recording disc. The recording and reproducing of the signals are performed using the first light spot while the erasing of the recorded signals is made by using the second light spot or cooperatively the first and second light spots.

For the recording media capable of a high-density recording, a high-speed recording function is especially required to record the increasing amount of information.

It is therefore the object of the present invention to provide a heat mode optical recording method and apparatus in which information can be recorded erased and recorded again at a high speed wherein recording is performed by means of high-temperature heating and high-speed cooling, and erasing is performed by means of heating and slow cooling.

The above object is achieved according to claims 1 and 3. The dependent claims relate to preferred embodiments.

The heat mode method of the present invention for reversibly optically recording information uses an optical recording medium which can exist in two different structures having different optical reflection factors, and which can be reversibly converted from one structure into the other structure by heating and cooling; it is based on irradiating portions of the optical recording medium along a track with two subsequent, closely arranged laser beam spots from two lasers of different wavelengths, wherein the heating and cooling is effected by controlling the light intensity of the laser beam spots,
the recording being performed by heating the optical recording medium by cooperatively using both laser beam spots,
the intensity of the preceding spot from the first laser being adjusted to preheat the respective portion of the optical recording medium to a temperature below a first preset temperature, and the intensity of the succeeding spot from the second laser being adjusted to heat the preheated portion to a temperature exceeding the first preset temperature and to obtain the first structure with rapidly cooling, and
the erasing being performed by heating the optical recording medium to a temperature exceeding a preset temperature, and slowly cooling, by cooperatively using both laser beam spots, to form the second structure; A method of this kind has been known from US-A-45 30 080.

The above method is **characterized** in accordance with the preset invention in that erasing is performed by cooperatively using both laser beam spots,

the intensity of the preceding spot from the first laser being adjusted to heat the respective portion of the optical recording medium to a temperature exceeding room temperature, but not exceeding the first preset temperature, and the intensity of the succeeding spot from the second laser being adjusted to slowly decrease the temperature.

In accordance with a prefered embodiment, an optical recording medium is used which can exist in a first and a second crystalline phase structure the first phase structure being obtained by heating to a temperature exceeding the first preset temperature and rapidly cooling,

and the second phase structure being obtained by heating to a temperature above a second preset temperature exceeding room temperature, but not exceeding the first preset temperature, and slowly cooling.

The apparatus of the present invention for carrying out the above method comprises

- an optical recording medium which can exist in two different structures having different optical reflection factors, and which can be reversibly converted from one structure into the other by heating and cooling,

- two lasers for producing light beams having different wavelengths,

- optical means for irradiating the optical recording medium along a track with two subsequent laser beam spots, comprising a preceding spot from the laser, and a succeeding spot from the laser, being in close vicinity to each other,
  and

- light intensity adjusting means for adjusting the intensity of the laser beam spots in such a manner that recording is performed by heating the optical recording medium by cooperatively using both laser beams spots,
  the intensity of the preceding spot from the first laser being adjusted to preheat the respective portion of the optical recording medium to a temperature below a first preset temperature, and the intensity of the succeeding spot from the second laser being adjusted to heat the preheated portion to a temperature exceeding the first preset temperature and to obtain the first structure rapidly cooling, and erasing is performed by heating the optical recording medium to a temperature exceeding a preset temperature, and slowly cooling, by cooperatively using both laser beam spots, to form the second structure;

this apparatus is characterized in that the light intensity adjusting means are designed such that with

erasing is performed by cooperatively using both laser beam spots, the intensity of the preceding spot from the first laser being adjusted to heat the respective portion of the optical recording medium to a temperature exceeding room temperature, but not exceeding the first preset temperature, and the intensity of the succeeding spot from the second laser being adjusted to slowly decrease the temperature.

According to another embodiment of the present invention, an optical recording medium is used in which recording is performed by heating the recording medium to a temperature equal to or more than a first temperature, and erasing is achieved by heating the recording medium to a temperature between the first temperature and a second temperature exceeding the first temperature wherein the two light spots located in the vicinity of each other are irradiated along the recording track on the optical recording medium so that the preceding spot thereof heats a recording location to a temperature between the first temperature and the second temperature, thereby erasing a recorded information and preheating the location at the same time, and the succeeding spot thereof heats the location to a temperature not less than the first temperature according to an information to be recorded, thereby recording the information.

According to still another embodiment of the present invention, a second temperature is set to exceed the room temperature, and a first temperature is set to exceed the second temperature wherein a first light spot determining a first condition under which an optical recording medium heated to a temperature exceeding the first temperature is cooled, and a second light spot determining a second condition under which the optical recording medium heated to a temperature exceeding the second temperature and not exceeding the first temperature is cooled are irradiated on the guide track of the optical recording medium to as to be located in the neighborhood of each other, so that a signal is recorded and erased on the optical recording medium by controlling the diameter of each light spot and/or the light intensity thereof. In more detail, based on the temperature and time experimentally confirmed to be required to cause a phase change which leads to a change of the optical reflection factor, as means for determining the first and second conditions, two laser units having different wavelengths are provided, and the optical system is configured such that the beam emitted from one of these laser units results in a just focus, and the beam from the other unit produces a defocus condition. The diameter of each spot and the intensity of each laser beam are controlled so that the recording medium is preheated or slowly cooled by use of the defocus spot, and the predetermined temperature is developed by use of the just focus spot, thereby recording a signal on the recording medium or erasing a recorded signal.

The present invention will be apparent from the following detailed description with reference to the accompanying drawings in which:

Fig. 1 is a schematic representation illustrating an embodiment of the present invention;

Fig. 2 is an explanatory diagram for explaining the fundamental principle for recording and erasing data on an optical disk;

Figs. 3A - 6C are diagrams illustrating operations to record and to erase information in an apparatus according to the present invention;

Fig. 7 is a schematic representation showing an example of a pit disposed in a disk, and

Fig. 8 is a schemaitc representation illustrating another embodiment of the present invention.

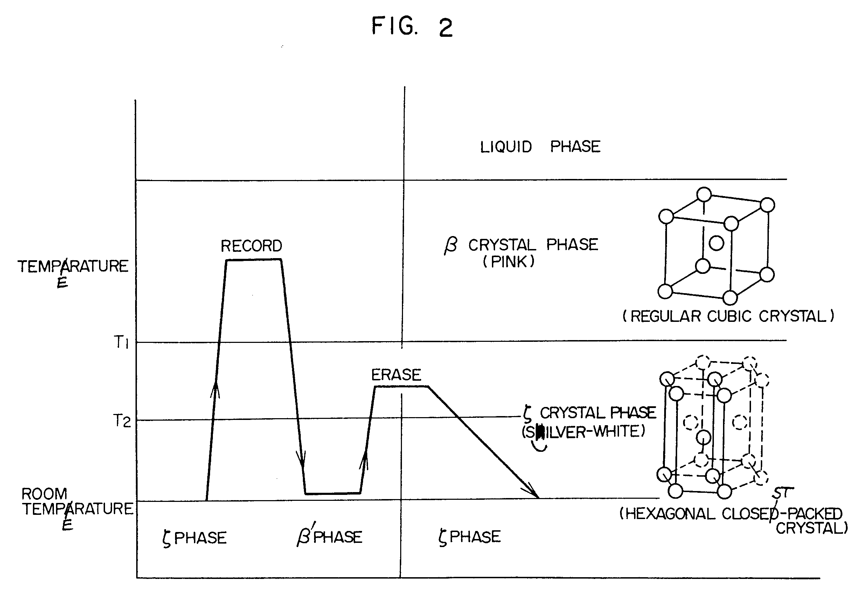

Fig. 2 shows the principle of the recording and erasing by use of a phase change recording medium in which when the temperature exceeds the first temperature $T_1$, the $\beta$ crystal phase appears, and the color changes to pink. When the temperature is rapidly lowered to the room temperature the $\beta'$ crystal phase which is the same crystal structure as the $\beta$ crystal phase appears and is retained. If the temperature is increased to exceed the second temperature $T_2$ and not to exceed the first temperature $T_1$ to change the $\beta$ phase into the $\varsigma$ crystal phase and then the temperature is decreased to the room temperature, as a result, the $\varsigma$ crystal phase is retained, and the color changes to silver-white. The crystal developing the colors of pink and silver-white has different reflection factors for the laser light having, for example, a wavelength of 830 nm. That is, when a certain amount of light is irradiated onto the crystal, the amount of reflected light is changed, and hence the $\beta'$ crystal phase and the $\varsigma$ crystal phase can be discriminated.

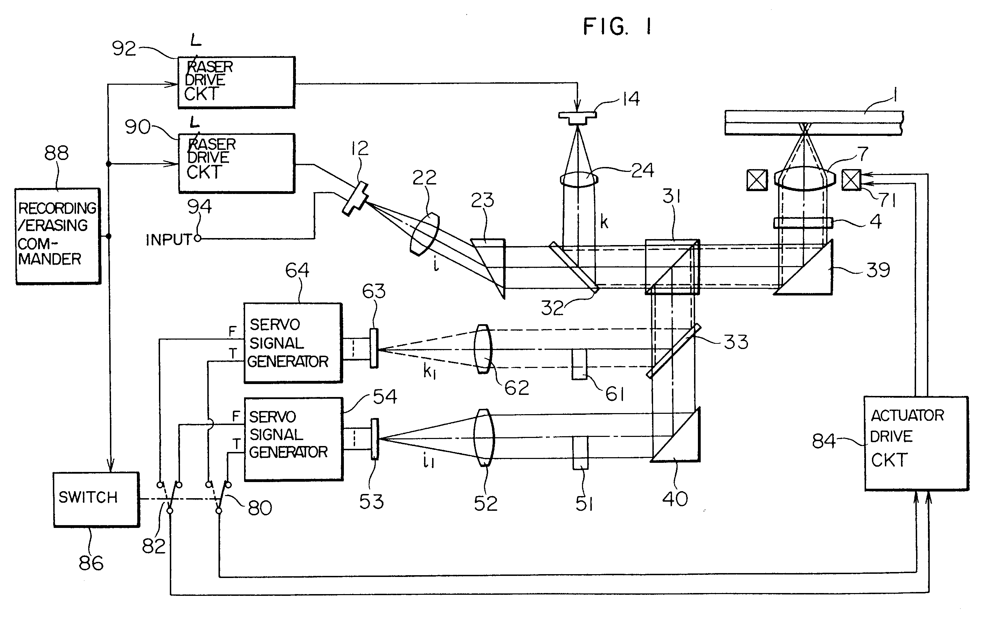

In the optical recording method and apparatus of the present invention an optical recording medium developing such a phase change may advantageously used. Fig. 1 shows an embodiment of the apparatus in which divergent light beams from semiconductor laser units 12 and 14 having different wavelengths are passed through collimator lenses 22 and 24 so as to obtain substantially parallel light beams i and k. Two different wavelengths are used to prevent an interference from occurring between the two light beams and to separate the two light beams, thereby enabling the beams to be separately detected. For example, the wavelengths of the lasers 12 and 14 may be 780 nm and 830 nm, respectively. It is assumed here that the semiconductor laser 12 is utilized for the recording and reproducing operations, and the laser 14 is utilized for the erasing operation. Since the parallel light beam i is used for the recording operation, the light beam is shaped to set the ratio of the longitudinal length to the transversal length of the cross section of the beam to be substantially equal to 1 by use of a first prism 23, so that a circular light spot is formed on a disk 1. A wavelength separation filter 32 allows to pass light therethrough having the wavelength of the semiconductor laser 12 and reflects the light having the wavelength of the semiconductor laser 14. A p-polarized beam contained in the beam from the prism 23 passes through a polarized beam splitter 31 and is transmitted through a mirror 39 and a 1/4-wavelength plate 4 so as to be focused by an objective 7, thereby forming on the disk 1 the light spot of the light beam i which has a substantially circular shape. The substantially parallel light beam k is reflected by the wavelength separation filter 32; thereafter, the light is transferred in the same way as for the light beam i. However, the light spot of the light beam k has not passed through a prism for shaping the beam, and hence an elliptical far field pattern of the laser beam is produced with the shape unchanged, and the resultant light spot is of an elliptic shape having the longer dimension along the direction of the track. The light reflected on the disk 1 is reflected on the objective 7, the 1/4-wavelength plate 4, and the mirror 39. Since the reflected beam passes the 1/4-wavelength plate two times, namely, in one direction and in another direction opposite thereto, an S-polarized light results. The S-polarized light is then reflected on the polarized light beam splitter 31. The reflected light is splitted by a wavelength separation filter 33 into a beam $k_1$ and a beam $i_1$, which then passes the wavelength separation filter 33 and is reflected on a mirror 40; and the resultant light passes through a Foucault prism 51 and a lens 52 to reach a light detector 53. The Foucault prism 51 focuses a light spot on the light detector, the light spot including a focusing light spot having a semicircular shape and a tracking spot on the sides thereof. According to the state of the focused image of the light detector 53, a servo signal generator 54 generates a servo signal F for the focusing and a servo signal T for the tracking. These servo signals pass change-over switches 80 and 82 and are then amplified by an actuator circuit 84, and then the obtained signal is supplied to an actuator 71, which is thus activated to achieve the focusing and the tracking of the objective 7.

On the other hand, the beam $k_1$ is reflected by the wavelength separation filter 33 and passes through a Foucault lens 61 and a detection lens 62 to reach a light detector 63, and hence a servo signal generator 64 generates the servo signals for the focusing and the tracking of the objective 7. As described above, the objective 7 is driven to control the focusing and the tracking through the change-over switches 80 and 82, the actuator drive circuit 84, and the actuator 71. The two servo signals are alternatively selected through a switching operation of the switch change-over device 86 to change over the change-over switches 80 and 82. By a recording/erasing commander 88 activated by an operator, the switch change-over device 86 selects the servo signal generator 54 for the recording and selects the servo signal generator 64 for the erasing. When the recording/erasing commander 88 is operated, laser drive circuits 90 and 92 both generate drive signals to drive the semiconductor lasers 12 and 14. For the recording, emission of the semiconductor laser 12 is controlled according to an information input from an input terminal 94 so as to be recorded.

The objective 7 is designed to be placed at one of two positions, and the positions can be selected by use of a servo mechanism including the servo signal generators 54 and 64, the actuator drive circuit 84, and the actuator 71.

The light beams k and i are substantially parallel light having almost the same intensity; however, the lens system is configured such that one of these beams is slightly divergent and the other one thereof is slightly convergent. The objective 7 is adapted to be able to be located into two positions. At one position of the objective 7, one of the light beams k and i is focused to form a minimum spot, and the other beam is defocused to form an obscure spot, and at the other position of the objective 7, the focusing of the spot is reversed. Consequently, when the objective 7 is located at a position to set the spot of the light beam i to just focus, the change-over switches 80 and 82 are changed over as indicated with the solid lines, whereas, when the objective 7 is located at a position to set the spot of the light beam k to just focus, the change-over switches 80 and 82 are changed over as indicated with the dashed lines.

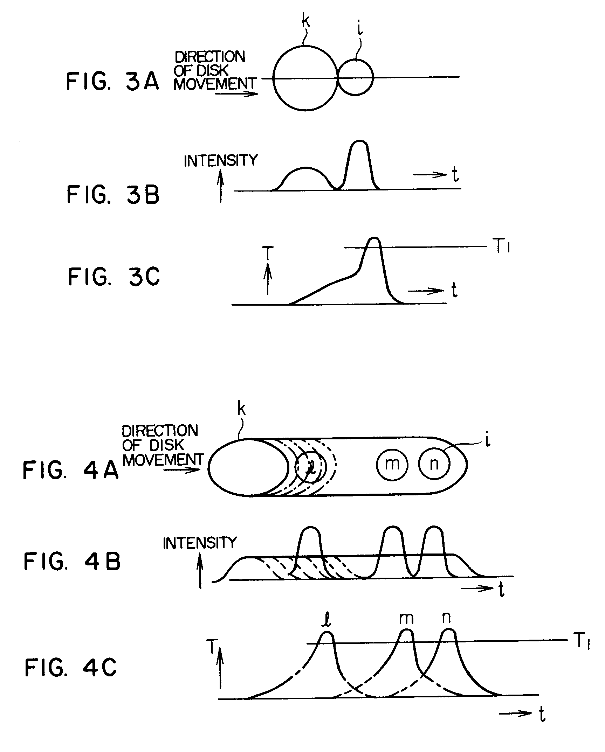

According to this embodiment for the recording operation, a position where the spot of the light beam k becomes greater than the spot of the light beam i, and the spot i is focused to form a minimum area is selected for the recording operation by use of the mechanism described above. Figs. 3A - 3B show the positional relationships of the spots on the disk and the change of intensity with respect to time of the light irradiated onto a pit position to be accessed, respectively. In this diagram, however, the lasers 12 and 14 have almost the same outputs, and hence the maximum value of the energy density of the spot of the light beam k having a larger diameter is less than that of the energy density of the spot of the light beam i focused to a point in the vicinity of the diffraction limit. The temperature T at a point (pit position) on a rotating disk varies with respect to time t according to the intensity change of Fig. 3B, as shown in Fig. 3C. Namely, in this case, the spot of the light beam k preheats the pit position to be accessed to a temperature exceeding the temperature $T_2$ and not exceeding the temperature $T_1$ so as to minimize the time required for the recording spot of the light beam i to heat the pit position so that the temperature T thereof exceeds $T_1$. This preheating operation enables a high-speed recording. A relatively wide range is preheated due to the large diameter of the preheating spot of the light beam k; consequently, even if there exists a heat dissipation in the preheated range, the temperature of the pit position can be retained at the required temperature until the pit position is irradiated by the spot of the light beam i. Although the spots of light beams k and i are adjacent to each other as in Fig. 3A, the location thereof are slightly separated from each other so that the characteristic of the temperature change of Fig. 3C is developed. Setting of T between the temperatures $T_1$ and $T_2$ and setting of T to a temperature equal to or more than the temperature $T_1$ are achieved depending on the outputs of the semiconductor lasers, the diameters of the spots, and the disk rotary frequency. These values are set according to empirical rules based on the results of experiments.

Fig. 4A is a schematic diagram illustrating a case where the light beam k also has a larger diameter and is continuously irradiated during the recording operation, and the light beam i having a smaller diameter is irradiated only onto the recording pit positions l, m, and n. Figs. 4B - 4C show the intensity change of the light beam i and the change of the temperature T at the pit position, respectively. In this case, the spot of the light beam k is not turned on and off for each pit, i.e., the preheating operation is successively performed for several recording signals. As described above, a recording portion is preheated by the preceding light beam k, and the recording positions are heated by the succeeding light beam i to a temperature equal to or more than the first temperature $T_1$, which enables to effect recording when the optical recording medium is rotating at a high speed and further the recording width of the spot of the light beam i can be reduced or a small spot of the light beam i can be used due to the effect of preheating by the spot of the light beam k. As a result, with the conventional high-density recording being enabled, the access time in the sense of a memory is improved, and the speed of the signals to be recorded or reproduced in a real-time fashion can be increased. In general, to enable a recording at a high peripheral speed, the selection of materials and the configuration of media are improved to increase the recording sensitivity of the recording medium; however, high recording sensitivity means that the recording medium is susceptible to influences from temperature, light, and the like, which leads to the problem of the retention of recorded data to be stored. Consequently, the method of the present invention in which a portion to be subjected to a recording is temporarily heated, when a recording is desired, to increase the recording sensitivity of the recording medium has also the effect that the stability of the recorded data is improved.

The recording method as described above in which the recording medium is first preheated and then recording is effected is not restricted by the recording media developing a phase change from a $\zeta$ crystal phase to a $\beta$ crystal phase but this method is also applicable to recording media which develop a phase change from a crystal phase to an amorphous phase, or which enable to form small holes.

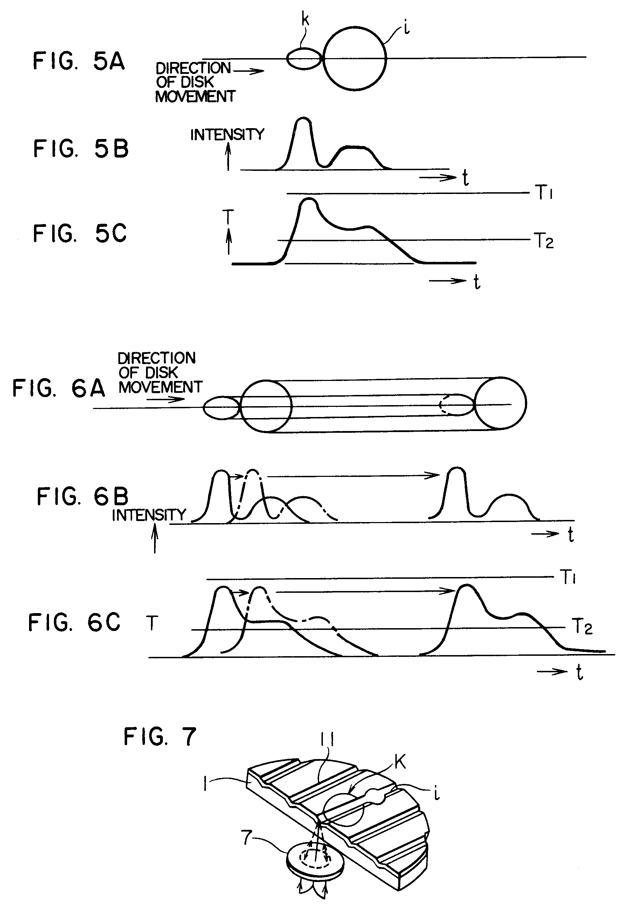

Following the case of the recording operation, the case of erasing operation will next be described. Fig. 5A is a schematic diagram illustrating a case where the focus control is effected to set the spot of light beam k to the minimum size. In this case, as described above, the spot of light beam i is defocused and hence the diameter of the spot becomes greater. When these light beams k and i are irradiated onto the rotating optical recording medium, the intensity change and the temperature change at the pit position on the disk are as shown in Figs. 5B and 5C, respectively. Namely, the light beam k heats the associated pit to a temperature exceeding the second temperature $T_2$ and not exceeding the first temperature $T_1$, and the time to slowly cool down the pit is reserved by use of the light beam i having the expanded spot, thereby erasing the information recorded on the recording medium. In this case, the corresponding pit may be kept heated by the light beam i to a temperature between the temperatures $T_1$ and $T_2$. Since the light beam i heats a wide range, the corresponding pit portion has a large amount of remaining heat, which ensures slow cooling.

Although the temperature condition at the pit portion can be obtained also when the semiconductor lasers 12 and 14 supply constant outputs for recording and erasing, it is favorable for the optimum temperature condition that the outputs from the lasers 12 and 14 are varied by changing over the outputs from the laser drive circuits 90 and 92 according to an instruction from the recording/erasing commander 88.

Fig. 6 is a schematic diagram illustrating a case where the light beams k and i which are the same or those of Fig. 5 are continuously irradiated, and the information can be successively erased on a track.

By use of a spot of the light beam k of which the cross section is expanded in the same way as that illustrated in Figs. 4A - 4C, a recording track is continuously heated to a temperature between the temperatures $T_1$ and $T_2$, thereby erasing by the heating operation the information already recorded in the track; moreover, by applying the similar preheating at the same time, the recording can be effected by the succeeding spot of the light beam i according to the information to be recorded.

In the recording and erasing operations illustrated in Figs. 3 - 6, the spot diameter of each beam is changed to set the energy density of the irradiated light and hence the heating temperature. However, together with the operation to change the spot diameter, the preceding light beam k may supply the corresponding pit, for example, with a maximum energy which heats the pit to a temperature below $T_1$ for the recording (defocus state) and erasing (just focus state) , so that the temperature of a position irradiated with the light beam i exceeds $T_1$ for the recording and that the light beam i is kept staying below for the erasing by changing the output from the laser 12 by use of the laser drive circuit 90, thereby further improving the operational characteristic.

According to the present invention as described above, the objective 7 is controlled by the actuator 71 in such a manner that the preceding spot of the light beam k has a larger size, and the spot of the light beam i is focused to form a small dimension to an extent near the diffraction limit. The signal from the detector 53 or 63 of Fig. 1 may be used to control the objective 7. However, when using the defocus side, an offset must be supplied to the focus signal as will be described later.

As shown in Fig. 7, the optical disk 1 is provided with a guide pit 11 in advance for a high-density recording. For example, a tracking is achieved to track the pit 11 by detecting the light diffracted by the pit 11. In the tracking operation, an error of a light spot with respect to the track can be detected with a higher sensitivity when the servo control is accomplished by use of the detector 53 or 63 and the servo signal generator 54 or 64 on the just focus side. Consequently, the tracking can be achieved with a minimized error by using a small spot light as the tracking detection signal, namely, the spots of the light beams i and k are used for the recording and the erasing, respectively. For the reproducing operation, since the recorded bits are read by use of a spot which is naturally focused to an extent near the diffraction limit, the detection signal for the tracking is also obtained on the small spot side. On the other hand, to detect a signal for the focus servo by use of the detectors 53 and 63, the conventional four-partition astigmatism sensor is utilized, for example. If the difference between two summation signals each obtained by adding the signals from two partitions of the sensor is within a range developing a linear relationship, either one of the spots may be used by supplying an offset to the servo circuit; however, the focus error can be further minimized by using the small spot side where the diffraction phenomenon due to the pit as described above is reduced.

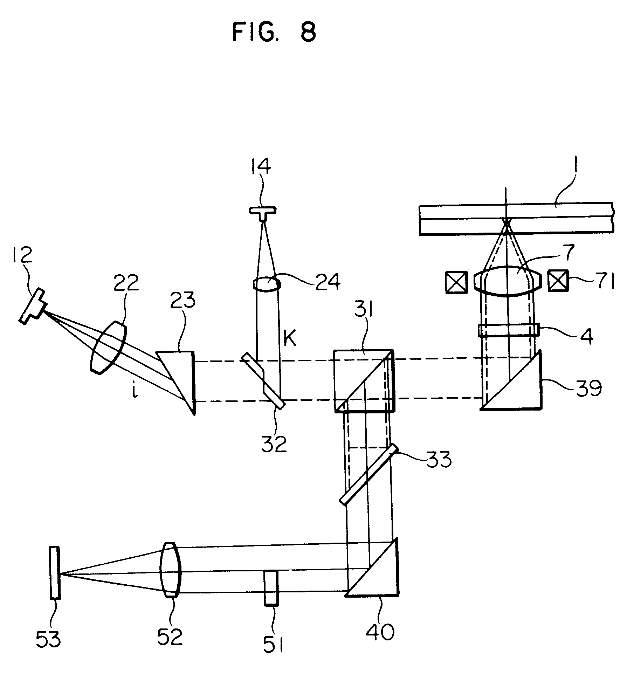

Fig. 8 is a schematic representation illustrating another embodiment implemented by removing the light detecting system related to the light detector 63 of Fig. 3 in which the electric circuit system is omitted. In this case, the servo signals for the focusing and tracking operations cannot be obtained by use of the light beam k, and only the light detector 53 for the light beam i is utilized. In this configuration, for the recording in which the spot diameter of the light beam i is reduced, the focusing and tracking operations can be accomplished with a high accuracy as described above; however, for the erasing in which the spot diameter of the light beam i is enlarged, an offset must be supplied to the focus error signal, and hence the accuracy is slightly lowered. In the erasing operation, however, even if the spot is slightly defocused, no practical problem is caused.

As described above, according to the present invention, a recording pit is preheated for the recording by the preceding spot of the light beam k to a temperature not exceeding a temperature $T_1$ associated with a phase change, and the succeeding spot of the light beam i is irradiated onto the pit according to the signals to be recorded so as to heat the pit to a temperature not below $T_1$, which leads to the effect that a high-density recording is achieved at a high speed by use of a beam diameter focused to an extent near the diffraction limit.

## Claims

1. A heat mode method for reversibly optically recording information on an optical recording medium

   which can exist in two different structures having different optical reflection factors, and which can be reversibly converted from one structure into the other structure by heating and cooling

   by irradiating portions of the optical recording medium along a track with two subsequent, closely arranged laser beam spots from two lasers of different wavelengths,

   wherein the heating and cooling is effected by controlling the light intensity of the laser beam spots,

   the recording being performed by heating the optical recording medium by cooperatively using both laser beam spots,

   the intensity of the preceding spot from the first laser being adjusted to preheat the respective portion of the optical recording medium to a temperature below a first preset temperature $(T_1)$, and the intensity of the succeeding spot from the second laser being adjusted to heat the preheated portion to a temperature exceeding the first preset temperature $(T_1)$ and to obtain the first structure with rapidly cooling,

   and

   the erasing being performed by heating the optical recording medium to a temperature exceeding a preset temperature, and slowly cooling, by cooperatively using both laser beam spots, to form the second structure,

   **characterized** in that

   erasing is performed by cooperatively using both laser beam spots,

   the intensity of the preceding spot from the first laser (14) being adjusted to heat the respective portion of the optical recording medium to a temperature exceeding room temperature, but not exceeding the first preset temperature $(T_1)$, and the intensity of the succeeding spot from the second laser (12) being adjusted to slowly decrease the temperature.

2. The method of claim 1, characterized in that an optical recording medium is used which can exist in a first and a second crystalline phase structure ($\beta'$ phase, $\zeta$ phase), the first phase structure ($\beta'$ phase) being obtained by heating to a temperature exceeding the first preset temperature $(T_1)$ and rapidly cooling,

   and the second phase structure ($\zeta$ phase) being obtained by heating to a temperature above a second preset temperature $(T_2)$ exceeding room temperature, but not exceeding the first preset temperature $(T_1)$, and slowly

cooling.

3. An apparatus for carrying out the method of claim 1 or 2,

comprising
- an optical recording medium (1) which can exist in two different structures having different optical reflection factors, and which can be reversibly converted from one structure into the other by heating and cooling,
- two lasers (12, 14) for producing light beams (i, k) having different wavelengths,
- optical means (7, 22, 24, 32) for irradiating the optical recording medium (1) along a track with two subsequent laser beam spots, comprising a preceding spot from the laser (14), and a succeeding spot from the laser (12), being in close vicinity to each other,

and
- light intensity adjusting means (7, 71, 54, 64, 84, 90, 92) for adjusting the intensity of the laser beam spots in such a manner that recording is performed by heating the optical recording medium by cooperatively using both laser beam spots,

the intensity of the preceding spot from first laser being adjusted to preheat the respective portion of the optical recording medium to a temperature below a first preset temperature ($T_1$), and the intensity of the succeeding spot from the second laser being adjusted to heat the preheated portion to a temperature exceeding the first preset temperature ($T_1$) and to obtain the first structure rapidly cooling, and erasing is performed by heating the optical recording medium to a temperature exceeding a preset temperature, and slowly cooling, by cooperatively using both laser beam spots, to form the second structure,

characterized in that

the light intensity adjusting means (7, 71, 54, 64, 84, 90, 92) are designed such that erasing is performed by cooperatively using both laser beam spots,

the intensity of the preceding spot from the first laser (14) being adjusted to heat the respective portion of the optical recording medium to a temperature exceeding room temperature, but not exceeding the first preset temperature ($T_1$), and the intensity of the succeeding spot from the second laser (12) being adjusted to slowly decrease the temperature.

4. The apparatus according to claim 3, characterized by an optical recording medium which can exist in a first and a second crystalline phase structure, the first phase structure ($\beta'$ phase) being obtained by heating to a temperature exceeding a first preset temperature ($T_1$) and rapidly cooling,

and the second phase structure ($\varsigma$ phase) being obtained by heating to a temperature above a second preset temperature ($T_2$) exceeding room temperature, but not exceeding the first preset temperature ($T_1$), and slowly cooling.

**Patentansprüche**

1. Thermisches Verfahren zur reversiblen optischen Aufzeichnung von Information auf einem optischen Aufzeichnungsmedium,

das in zwei unterschiedlichen Strukturen mit unterschiedlichen optischen Reflexionsfaktoren vorliegen und durch Erhitzen und Abkühlen reversibel von einer Struktur in die andere Struktur umgewandelt werden kann,

indem Bereiche des optischen Aufzeichnungsmediums längs einer Spur mit zwei aufeinanderfolgenden, eng benachbart angeordneten Laserstrahlflecken von zwei Lasern unterschiedlicher Wellenlänge bestrahlt werden,

wobei das Erhitzen und Abkühlen durch Kontrolle der Lichtintensität der Laserstrahlflecken bewirkt wird,

die Aufzeichnung durch Erhitzen des optischen Aufzeichnungsmediums mit raschem Abkühlen unter kooperativer Verwendung beider Laserstrahlflecken durchgeführt wird, wobei die Intensität des vorausgehenden Flecks vom ersten Laser so eingestellt wird, daß der betreffende Bereich des optischen Aufzeichnungsmediums auf eine Temperatur unterhalb einer ersten vorgegebenen Temperatur ($T_1$) vorerhitzt wird, und die Intensität des nachfolgenden Flecks vom zweiten Laser so eingestellt wird, daß der vorerhitzte Bereich auf eine Temperatur oberhalb der ersten vorgegebenen Temperatur ($T_1$) erhitzt wird, und die erste Struktur erhalten wird,

und

das Löschen durch Erhitzen des optischen Aufzeichnungsmediums auf eine Temperatur oberhalb einer vorgegebenen Temperatur und langsames Abkühlen unter kooperativer Verwendung beider Laserstrahlflecken und Bildung der zweiten Struktur durchgeführt wird,

**dadurch gekennzeichnet,** daß

das Löschen durch kooperative Verwendung beider Laserstrahlflecken durchgeführt wird,

wobei die Intensität des vorausgehenden Flecks vom ersten Laser (14) so eingestellt wird, daß der betreffende Bereich des optischen Aufzeichnungsmediums auf eine Temperatur erhitzt wird, die oberhalb Raumtemperatur liegt, jedoch die erste vorgegebene Temperatur ($T_1$) nicht übersteigt, und die Intensität des nachfolgenden Flecks vom zweiten Laser (12) so eingestellt wird, daß die Temperatur langsam abfällt.

2. Verfahren nach Anspruch 1, dadurch gekennzeichnet, daß ein optisches Aufzeichnungsmedium verwendet wird, das in einer ersten und einer zweiten kristallinen Phasenstruktur ($\beta'$-Phase, $\varsigma$-Phase) vorliegen kann, wobei die erste Phasenstruktur ($\beta'$-Phase) durch Erhitzen auf eine Temperatur, welche die erste vorgegebene Temperatur ($T_1$) übersteigt, und rasches Abkühlen erhalten wird, und die zweite Phasenstruktur ($\varsigma$-Phase) durch Erhitzen auf eine Temperatur oberhalb einer zweiten vorgegebenen Temperatur ($T_2$), die oberhalb Raumtemperatur liegt, jedoch die erste vorgegebene Temperatur ($T_1$) nicht übersteigt, und langsames Abkühlen erhalten wird.

3. Vorrichtung zur Durchführung des Verfahrens nach Anspruch 1 oder 2,

mit
- einem optischen Aufzeichnungsmedium (1), das in zwei unterschiedlichen Strukturen mit unterschiedlichen optischen Reflexionsfaktoren vorliegen und durch Erhitzen und Abkühlen reversibel von einer Struktur in die andere Struktur umgewandelt werden kann,
- zwei Lasern (12, 14) zur Erzeugung von Lichtstrahlen (i, k) unterschiedlicher Wellenlänge,
- einer optischen Einrichtung (7, 22, 24, 32) zur Bestrahlung des optischen Aufzeichnungsmediums längs einer Spur mit zwei aufeinanderfolgenden Laserstrahlflecken, von denen der vorausgehende Fleck vom Laser (14) und der nachfolgende Fleck vom Laser (12) stammen und die sich in enger Nachbarschaft zueinander befinden,

und
- einer Einrichtung zur Einstellung der Lichtintensität (7, 71, 54, 64, 84, 90, 92) zur Einstellung der Intensität der Laserstrahlflecken in der Weise, daß die Aufzeichnung durch Erhitzen des optischen Aufzeichnungsmediums mit raschem Abkühlen unter kooperativer Verwendung beider Laserstrahlflecken durchgeführt wird, wobei die Intensität des vorausgehenden Flecks vom ersten Laser so eingestellt wird, daß der betreffende Bereich des optischen Aufzeichnungsmediums auf eine Temperatur unterhalb einer ersten vorgegebenen Temperatur ($T_1$) vorerhitzt wird, und die Intensität des nachfolgenden Flecks vom zweiten Laser so eingestellt wird, daß der vorerhitzte Bereich auf eine Temperatur oberhalb der ersten vorgegebenen Temperatur ($T_1$) erhitzt wird, und die erste Struktur erhalten wird, und das Löschen durch Erhitzen des optischen Aufzeichnungsmediums auf eine Temperatur oberhalb einer vorgegebenen Temperatur und langsames Abkühlen unter kooperativer Verwendung beider Laserstrahlflecken und Bildung der zweiten Struktur durchgeführt wird,

**dadurch gekennzeichnet,** daß

die Einrichtung zur Einstellung der Lichtintensität (7, 71, 54, 64, 84, 90, 92) so ausgebildet ist, daß das Löschen durch kooperative Verwendung beider Laserstrahlflecken durchgeführt wird,

wobei die Intensität des vorausgehenden Flecks vom ersten Laser (14) so eingestellt wird, daß der betreffende Bereich des optischen Aufzeichnungsmediums auf eine Temperatur erhitzt wird die oberhalb Raumtemperatur liegt, jedoch die erste vorgegebene Temperatur ($T_1$) nicht übersteigt, und die Intensität des nachfolgenden Flecks vom zweiten Laser (12) so eingestellt wird, daß die Temperatur langsam abfällt.

4. Vorrichtung nach Anspruch 3, gekennzeichnet durch ein optisches Aufzeichnungsmedium, das in einer ersten und einer zweiten kristallinen Phasenstruktur vorliegen kann, wobei die erste Phasenstruktur ($\beta$'-Phase) durch Erhitzen auf eine Temperatur oberhalb einer ersten vorgegebenen Temperatur ($T_1$) und rasches Abkühlen erhalten wird,

und die zweite Phasenstruktur ($\zeta$-Phase) durch Erhitzen auf eine Temperatur oberhalb einer zweiten vorgegebenen Temperatur ($T_2$), die oberhalb Raumtemperatur liegt, jedoch die erste vorgegebene Temperatur ($T_1$) nicht übersteigt, und langsames Abkühlen erhalten wird.

**Revendications**

1. Procédé de mise en oeuvre de mode d'échauffement pour l'enregistrement optique réversible d'informations sur un support d'enregistrement optique,

lequel peut exister suivant deux structures différentes ayant des facteurs différents de réflexion optique et peut être converti, de manière réversible, d'une structure dans l'autre structure via un échauffement et un refroidissement par irradiation de parties du support d'enregistrement optique le long d'une piste à l'aide de deux points lumineux de faisceaux laser disposés de manière rapprochée l'un après l'autre, qui proviennent de deux lasers ayant des longueurs d'onde différentes,

où on effectue l'échauffement et le refroidissement en ajustant l'intensité lumineuse des points lumineux des faisceaux laser,

on réalise l'enregistrement par échauffement du support d'enregistrement optique en utilisant, en coopération, les deux points lumineux du faisceau laser, l'intensité du point lumineux précédent, qui vient du premier laser, étant ajustée de façon à préchauffer la partie respective du support d'enregistrement optique jusqu'à une température située en dessous d'une première température préétablie ($T_1$), et l'intensité du point lumineux suivant, qui vient du deuxième laser, étant ajustée de façon à échauffer la partie préchauffée jusqu'à une température située au-delà de la première température préétablie ($T_1$) et à produire la première structure, avec un refroidissement rapide, et

on réalise l'effacement par échauffement du support d'enregistrement optique jusqu'à une température située au-delà d'une température préétablie, et par refroidissement lent, en utilisant, en coopération, les deux points lumineux des faisceaux laser, de façon à former la deuxième structure,

caractérisé en ce que :

on réalise l'effacement en utilisant, en coopération, les deux points lumineux des faisceaux laser, l'intensité du point lumineux précédent, qui vient du premier laser (14), étant ajustée de façon à échauffer la partie respective du support d'enregistrement optique jusqu'à une température située au-dessus de la température ambiante, mais ne dépassant pas la première température préétablie ($T_1$), et l'intensité du point lumineux suivant, qui vient du deuxième laser (12), étant ajustée de façon à faire diminuer lentement la température.

2. Procédé selon la revendication 1, caractérisé en ce qu'on utilise un support d'enregistrement optique qui peut exister dans une première et une deuxième structure de phase cristalline (phase $\beta$', phase $\zeta$), la première structure de phase (phase $\beta$') étant obtenue par échauffement à une température située au-delà de la première température préétablie ($T_1$) et par refroidissement rapide, et la deuxième structure de phase (phase $\zeta$) étant obtenue par échauffement à une température située au-dessus d'une deuxième température préétablie ($T_2$) située au-delà de la température ambiante, mais ne dépassant pas la première température préétablie ($T_1$), et par refroidissement rapide.

3. Appareil destiné à mettre en oeuvre le procédé de la revendication 1 ou 2, comprenant :
   - un support d'enregistrement optique (1) qui peut exister suivant deux structures différentes ayant des facteurs différents de réflexion optique et qui peut être converti de manière réversible d'une structure dans l'autre par échauffement et refroidissement,
   - deux lasers (12, 14) servant à produire des faisceaux lumineux (i, k) ayant des longueurs d'onde différentes,
   - un moyen optique (7, 22, 24, 32) servant à irradier le support d'enregistrement optique (1) le long d'une piste à l'aide de deux points lumineux de faisceaux laser situés l'un après l'autre, comprenant un point lumineux précédent qui vient du laser (14), et un point lumineux suivant qui vient du laser (12), ces points lumineux étant étroitement voisins l'un de l'autre, et
   - un moyen d'ajustement d'intensité lumineuse (7, 71, 54, 64, 84, 90, 92) servant à ajuster l'intensité des points lumineux des faisceaux laser de telle manière que l'enregistrement soit réalisé par échauffement du support d'enregistrement optique grâce à l'utilisation des deux points lumineux des faisceaux laser en coopération, l'intensité du point lumineux précédent, qui vient du premier laser, étant ajustée de façon à préchauffer la partie respective du support d'enregistrement optique jusqu'à une température située en dessous d'une première température préétablie ($T_1$), et l'intensité du point lumineux suivant, qui vient du deuxième laser, étant ajustée de façon à échauffer la partie préchauffée jusqu'à une température dépassant la première température préétablie ($T_1$) et à produire la première structure, avec refroidissement rapide, et que l'effacement soit réalisé par échauffement du support d'enregistrement optique jusqu'à une température dépassant une température préétablie et par refroidissement rapide, grâce à l'utilisation des deux points lumineux des faisceaux laser en coopération, de façon à former la deuxième structure,

caractérisé en ce que :

le moyen d'ajustement d'intensité lumineuse (7, 71, 54, 64, 84, 90, 92) est conçu de façon que :

l'effacement soit réalisé par utilisation des deux points lumineux des faisceaux laser en coopération, l'intensité du point lumineux précédent, qui vient du premier laser (14), étant ajustée de façon à échauffer la partie respective du support d'enregistrement optique jusqu'à une température située au-dessus de la température ambiante, mais ne dépassant pas la première température préétablie ($T_1$), et l'intensité du point lumineux suivant qui vient du deuxième laser (12) étant ajustée de façon à faire diminuer lentement la température.

4. Appareil selon la revendication 3, caractérisé par un support d'enregistrement optique qui peut exister dans une première et une deuxième structure de phase cristalline, la première structure de phase cristalline (phase $\beta'$) étant obtenue par échauffement jusqu'à une température qui dépasse une première température préétablie ($T_1$) et par refroidissement rapide, et la deuxième structure de phase (phase $\varsigma$) étant obtenue par échauffement jusqu'à une température située au-dessus d'une deuxième température préétablie ($T_2$) située au-delà de la température ambiante, mais ne dépassant pas la première température préétablie ($T_1$), et par refroidissement lent.

FIG. 1

EP 0 223 057 B1

# FIG. 2

LIQUID PHASE

$\beta$ CRYSTAL PHASE
(PINK)

(REGULAR CUBIC CRYSTAL)

$\zeta$ CRYSTAL PHASE
(SILVER-WHITE)

(HEXAGONAL CLOSED-PACKED CRYSTAL)

TEMPARATURE

RECORD

ERASE

$T_1$

$T_2$

ROOM TEMPARATURE

$\zeta$ PHASE     $\beta'$ PHASE     $\zeta$ PHASE

EP 0 223 057 B1

FIG. 3A

DIRECTION OF DISK MOVEMENT

k    i

FIG. 3B

INTENSITY

$\longrightarrow$ t

FIG. 3C

T

$T_l$

$\longrightarrow$ t

FIG. 4A

DIRECTION OF DISK MOVEMENT

k    i

m  n

FIG. 4B

INTENSITY

$\longrightarrow$ t

FIG. 4C

T

$\ell$  m  n

$T_l$

$\longrightarrow$ t

FIG. 5A

DIRECTION OF DISK MOVEMENT →

k    i

FIG. 5B

INTENSITY

t

FIG. 5C

T

T₁

T₂

t

FIG. 6A

DIRECTION OF DISK MOVEMENT →

FIG. 6B

INTENSITY

t

FIG. 6C    T

T₁

T₂

t

FIG. 7

I

II

K

i

7

FIG. 8